(19) Europäisches Patentamt
European Patent Office
Office européen des brevets

(11) Veröffentlichungsnummer : **0 455 078 B1**

(12) # EUROPÄISCHE PATENTSCHRIFT

(45) Veröffentlichungstag der Patentschrift : **27.07.94 Patentblatt 94/30**

(51) Int. Cl.$^5$ : **C08L 83/07,** C08K 3/10, C08K 3/30

(21) Anmeldenummer : **91106380.8**

(22) Anmeldetag : **20.04.91**

(54) **Siliconelastomere mit vermindertem Druckverformungsrest sowie Verfahren zu deren Herstellung.**

(30) Priorität : **04.05.90 DE 4014310**

(43) Veröffentlichungstag der Anmeldung : **06.11.91 Patentblatt 91/45**

(45) Bekanntmachung des Hinweises auf die Patenterteilung : **27.07.94 Patentblatt 94/30**

(84) Benannte Vertragsstaaten : **CH DE ES FR GB IT LI NL SE**

(56) Entgegenhaltungen :
**DE-A- 2 325 333**
**GB-A- 2 185 749**
**US-A- 4 640 956**

(73) Patentinhaber : **BAYER AG**
**D-51368 Leverkusen (DE)**

(72) Erfinder : **Steinberger, Helmut, Dr.**
**Winand-Rossi-Strasse 36**
**W-5090 Leverkusen 1 (DE)**
Erfinder : **Pesch, Klaus-Dieter, D.I.**
**Rüttersweg 83**
**W-5090 Leverkusen 1 (DE)**
Erfinder : **Naumann, Thomas, Dipl.-Kfm.**
**Rheindorfer Strasse 69 a**
**W-5090 Leverkusen 1 (DE)**

EP 0 455 078 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung sind Siliconelastomere auf Basis von platinkatalysierten und in der Wärme härtbaren Organopolysiloxanmassen, die durch einen besonders niedrigen Druckverformungsrest (englisch: compression set) nach erfolgter Vernetzung gekennzeichnet sind, sowie ein Verfahren zur Herstellung solcher Elastomere.

Herkömmliche Organopolysiloxanelastomere können bei der Prüfung nach DIN 53 517 einen Druckverformungsrest von bis zu 95 % haben, wenn sie einige Zeit Temperaturen über 150°C ausgesetzt werden. Bei vielen Anwendungen, z.B. als Dichtungen, ist es jedoch erforderlich, daß Organopolysiloxanelastomere längere Zeit Temperaturen bis über 300°C ausgesetzt werden können, ohne daß der Druckverformungsrest allzu stark ansteigt.

Massen auf Basis von Diorganopolysiloxanen, welche mittels organischer peroxidischer Verbindungen zu Elastomeren vernetzbar sind, sind nach dem Stand der Technik Wege beschrieben, besonders niedrige Druckverformungsreste ohne Temperung zu erzielen.

Hierzu sei auf z.B. die US-PS 3 261 801, die US-PS 3 468 838 und die US-PS 3 865 778 verwiesen, die Zusätze wie Bariumperoxid, Bariumoxid oder Magnesiumoxid zur Erzielung von besonders niedrigem Druckverformungsrest nach erfolgter Vulkanisation angeben.

Ein anderer Vorschlag DE 2 911 352 beschreibt die Anwendung mindestens eines basischen anorganischen Feststoffes, der durch Behandlung mit Organosiliziumverbindung hydrophobiert wurde, zur Herstellung von Elastomeren, die nach Erhitzen in Gegenwart von Luft einen besonders niedrigen Druckverformungsrest aufweisen.

Ein anderes Verfahren zur Herstellung von zu Elastomeren härtbaren Organopolysiloxanmassen mit vermindertem Druckverformungsrest wird in der EP 0 010 708, beschrieben: Hierbei verbessern Zusätze von 0,1 bis 8 Gew.-% - bezogen auf die Gesamtmischung - Polycarbodiimid in Form von Polycarbodiimid-Polysiloxan-Mischpolymeren, den Druckverformungsrest.

Die genannten und bekannten Verfahren zur Verbesserung des Druckverformungsrestes bei Polysiloxan-Elastomeren beziehen sich, wie erwähnt, alle auf Massen, welche mittels organischer peroxidischer Verbindungen zu Elastomeren vernetzbar sind.

In den letzten Jahren haben jedoch solche Organopolysiloxanmassen an steigender Bedeutung gewonnen, die durch eine Hydrosilylierungsreaktion von vinylhaltigen Siloxanen zur Vernetzung gebracht werden. Es ist bekannt, daß diese Hydrosilylierungsreaktion durch eine Reihe von Platinverbindungen katalytisch beschleunigt wird.

Derartige Platin-katalysierte Additionssysteme können ebenso wie peroxidisch vernetzte Systeme Druckverformungsreste bis zu 75 % aufweisen. Es ist wegen einer Reihe von technischen Anwendungen dieser additionsvernetzter Elastomere wünschenswert, den Druckverformungsrest zu verbessern.

Die für die peroxidisch vernetzten Organopolysiloxanmassen empfohlenen Verfahren zur Verminderung des Druckverformungsrestes ihrer Vulkanisate versagen jedoch bei den platinkatalysierten Additionssystemen.

Übertaschenderweise wurde gefunden, daß durch Platin katalysierte Additionssysteme zu Elastomeren mit besonders niedrigen Druckverformungsresten vernetzt werden können, wenn bestimmte Übergangsmetallchalkogenide der Organopolysiloxanmasse zugesetzt wurde.

Gegenstand der vorliegenden Erfindung sind somit Organopolysiloxanmassen, welche nach ihrer Vernetzung zu Elastomeren mit besonders niedrigem Druckverformungsrest vulkanisiert werden können, und die im wesentlichen folgende Bestandteile enthalten:

a) 100 Gewichtsteile eines vinylhaltigen Grundpolymers der Formel

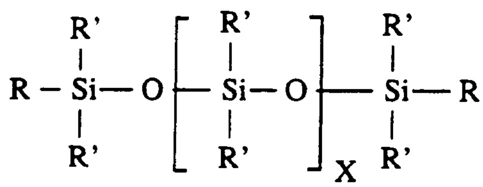

worin R und R′ Alkylreste mit 1 bis 8 Kohlenstoffatomen, Acrylreste, Vinylreste und Fluoralkylreste mit 3 bis 8 Kohlenstoffatomen sind, so daß das Polymer 0,0002 bis 3 Gew.-% Vinylgruppen enthält, und X so variiert wird, daß die Viskosität des Polymeren von 0,1 bis 1.000 Pa.s (von 100 bis 1.000.000 cp) bei 25°C reicht,

b) 0 bis 10 Gewichtsteile silanolhaltiger Siliconverbindungen mit einer Viskosität im Bereich von 0,010 bis

1 Pa.s (10 bis 1.000 cp) bei 25°C, wobei die organische Gruppe unter Alkylresten mit 1 bis 8 Kohlenstoffatomen, Vinylresten, Arylresten und Fluoralkylresten mit 3 bis 8 Kohlenstoffatomen so ausgewählt ist, daß das Polymer einen Silanolgehalt von 2 bis 10 % aufweist.

c) 0 bis 200 Gewichtsteile eines Füllstoffs,

d) 1 bis 50 Gewichtsteile eines Polysiloxanes der Formel

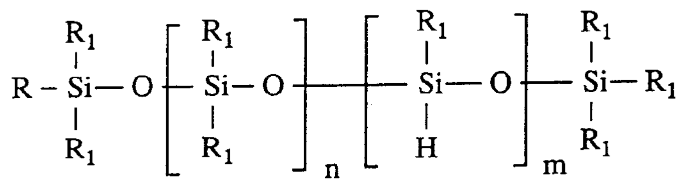

wobei

$R_1$ ein Alkylrest mit 1 bis 8 Kohlenstoffatomen oder Aryl- und Fluoralkylreste mit 3 bis 8 C-Atomen ist,

m > 3 und

n + m wird so variiert, daß das Polymer eine Viskosität im Bereich 0,005 bis 0,1 Pa.s bei 25°C hat und

e) 1 bis 250 ppm eines Platinkatalysators sowie gegebenenfalls Inhibitoren oder weiterer Hilfsmittel, sowie

f) 0,01 bis 8 Gew.-Teile, bevorzugt 0,05 bis 4 Gew.-Teile, eines Übergangsmetallsulfids und/oder -selenids oder einer Mischung mehrerer Übergangsmetallsulfide und/oder -selenide, wobei als bevorzugte Übergangsmetalle Eisen, Kobalt, Nickel, Cadmium, Zink, Molybdän und/oder Wolfram verwendet werden.

Gegenstand der Erfindung ist ferner ein Verfahren zur Herstellung der erfindungsgemäßen Masse, welche dadurch gekennzeichnet ist, daß man die obengenannten Bestandteile zur Umsetzung bringt.

Als Ausgangskomponenten a) und b) für das erfindungsgemäße Verfahren eignen sich bekannte Substanzen, wie sie z.B. aus W. Noll "Chemie und Technologie der Silicone", 2. Aufl. 1968, S. 212 bekannt sind.

Als Füllstoffe für das erfindungsgemäße Verfahren eignen sich z.B. pyrogene oder gefällte, feinteilige Kieselsäuren mit einer BET-Oberfläche von 50 bis 500 $m^2/g$. Derartige Füllstoffe können oberflächenmodifiziert sein, z.B. mit siliziumorganischen Verbindungen. Die Modifizierung kann auch während der Einarbeitung in das Polymer durch Zusatz von z.B. Hexamethyldisilazan oder 1,3-Divinyl-1,1,3,3-tetramethyldisilazan unter Zusatz von Wasser erreicht werden.

Weiter können als Füllstoffe Substanzen wie z.B. Diatomeenerden, feinteilige Quarzmehle, amorphe Kieselsäuren oder Ruße eingesetzt werden.

Die Platinkatalysatoren sind die üblicherweise für die additionsvernetzenden Systeme eingesetzten Katalysatoren, insbesondere können z.B. Pt(O)-Komplexe mit Vinylsiloxanen als Liganden verwendet werden.

Erfindungsgemäß kann es erforderlich sein, Inhibitoren mitzuverwenden. Dafür eignen sich acetylenische Alkohole wie z.B. 2-Methyl-butin(3)-ol(2), Ethinylcyclohexanol, Tetramethyltetravinylcyclotetrasiloxan oder Tetramethyldivinyldisiloxan.

Die erfindungsgemäßen Übergangsselenide und/oder -sulfide sind handelsüblich erhältliche Produkte, die in fein verteilter Form zur Organopolysiloxanmasse, bestehend aus a) bis e) zugesetzt werden, bevor die Vernetzung erfolgt. Die eingesetzten Übergangssulfide und/oder -selenide weisen eine mittlere Teilchengröße von 10 bis 25 Mikrometer auf.

Die erfindungsgemäß modifizierten Organopolysiloxanmassen sind geeignet zur Herstellung von Formartikeln jeglicher Art, insbesondere für solche Artikel, für die ein besonders niedriger Wert des Druckverformungsrestes wichtig ist, wie z.B. Walzen, Dichtungen und O-Ringe.

Ferner erlangt ein Verfahren zur Herstellung von Artikeln wachsende Bedeutung, welche aus einem thermoplastischen Material und einem Elastomermaterial zusammengesetzt sind.

Solche Hybridartikel werden gewöhnlich durch Zusammenformung (gemeinsame Ausformung) von Thermoplast und Elastomer hergestellt. Dabei kommt der übliche Verfahrensschritt der Temperung (post cure) des Artikels wegen der dazu erforderlichen hohen Temperaturen nicht in Betracht, da hier die Gefahr besteht, daß der Thermoplastteil des Artikels sich verformt oder aufschmilzt.

Für solche Gegenstände ist es daher wichtig, daß ein niedriger Druckverformungsrest schon unmittelbar nach der Vulkanisation (ohne Temperung) erreicht wird.

Die vorliegende Erfindung soll anhand der folgenden Beispiele näher erläutert werden.

## Beispiel 1

In einem Kneter werden 47 Gew.-Teile vinylendgestopptes Polydimethylsiloxan mit einer Viskosität von 10 Pa.s mit 4 Gew.-Teilen Hexamethyldisilazan, 0,3 Gew.-Teilen Tetramethyldivinyldisilazan und 3 Gew.-Teilen Wasser gemischt und anschließend mit 18 Gew.-Teilen pyrogen hergestellter Kieselsäure mit einer spezifischen Oberfläche von 300 $m^2/g$ nach BET zu einer homogenen Masse verknetet (Einarbeitung des Füllstoffs gemäß DE-OS 2 535 334). Die Mischung wurde zunächst auf 130°C erwärmt und 1,5 Stunden im geschlossenen Kneter gerührt und danach bei 160°C unter Vakuum von Wasser und überschüssigem Silazan befreit. Nach dem Erkalten des Compounds wird die Mischung mit folgenden Zusätzen vermischt und vulkanisiert:

Zu 90 g dieser Siliconbasiszusammensetzung wurden 1,53 g eines Trimethylsilylendblockierten Polyorganosiloxan-Vernetzers mit durchschnittlich 5 Methylhydrogensiloxaneinheiten und 3 Dimethylsiloxaneinheiten pro Molekül, 0,15 g eines Platinkatalysators in Form eines Komplexes von Chlorplatinsäure mit symmetrischen Divinyltetramethyldisiloxan und enthaltend 0,65 % Platin und etwa 0,02 g 3,5-Dimethyl-1-hexin-3-ol als Inhibitor gegeben. Die erhaltene härtbare elastomere Siliconzusammensetzung wurde dann zu Platten gepreßt und 10 Minuten bei 175°C gehärtet (A-Stufe).

Aus den gehärteten Platten werden die Prüfkörper gemäß den angegebenen DIN-Vorschriften (s. Tabelle) ausgeschnitten und geprüft.

Ein Teil der Proben wird nach erfolgter Vulkanisation in Heißluft während 4 Stunden bei 200°C gealtert. Im Anschluß daran werden die Prüfkörper gemäß den oben erwähnten DIN-Vorschriften geprüft (B-Stufe).

## Beispiel 2

In einem Kneter werden 47 Gew.-Teile vinylendgestopptes Polydimethylsiloxan, 4 Gew.-Teile Hexamethyldisilazan, 0,3 Gew.-Teile Tetramethyldivinyldisilazan, 3 Gew.-Teile Wasser und 18 Gew.-Teile pyrogene Kieselsäure gemäß Beispiel 1 gemischt und das fertige Compound wie folgt vulkanisiert:

90 g des Compounds werden mit 1,53 g eines Trimethylsilylendblockiertem Polyorganosiloxan-Vernetzers gemäß Beispiel 1, 0,15 g Platinkatalysator und 0,02 g 3,5-Dimethyl-1-hexin-3-ol und 1 g feingemahlenem Eisen(II)-sulfid mit einer durchschnittlichen Teilchengröße von 20 Mikrometer sorgfältig vermischt.

Die erhaltene härtbare Siliconzusammensetzung wird anschließend zu Platten gepreßt und 10 Minuten bei 175°C gehärtet.

Aus den gehärteten Platten werden die Prüfkörper gemäß den angegebenen DIN-Vorschriften (s. Tabelle 1) ausgeschnitten und geprüft.

Analog zu Beispiel 1 wird ein Teil der Proben nach erfolgter Vulkanisation in Heißluft während 4 Stunden bei 200°C gealtert. Im Anschluß daran werden die Prüfkörper gemäß den angegebenen DIN-Vorschriften geprüft.

## Beispiel 3

In Analogie zu Beispiel 1 wird eine elastomere Siliconzusammensetzung hergestellt und diese unter Zusatz von 1,0 g feingemahlenem Wolfram(IV)sulfid homogenisiert. Die hergestellte Mischung wird, wie in Beispiel 1 beschrieben, gehärtet und die Proben in entsprechender Weise vorbereitet.

## Beispiel 4

Entsprechend dem Beispiel 1 wird eine elastomere Siliconzusammensetzung hergestellt und diese unter Zusatz von 1,0 g feingemahlenem Cadmiumsulfid homogen vermischt. Die so hergestellte Mischung wird, wie in Beispiel 1 beschrieben, gehärtet und die Proben in entsprechender Weise vorbereitet.

## Beispiel 5

Entsprechend dem Beispiel 1 wird eine elastomere Siliconzusammensetzung hergestellt und diese unter Zusatz von 1,0 g feingemahlenem Cadmiumselenid homogen vermischt. Die so hergestellte Mischung wird, analog zu Beispiel 1, gehärtet und die Proben in der beschriebenen Weise vorbereitet.

## Beispiel 6

Entsprechend dem Beispiel 1 wird eine elastomere Siliconzusammensetzung hergestellt und diese unter Zusatz von 0,025 g feingemahlenem Eisen(II)selenid homogen vermischt.

Die so hergestellte Mischung wird, wie in Beispiel 1 beschrieben, gehärtet und die Proben in entsprechender Weise vorbereitet.

Beispiel 7

In Analogie zu Beispiel 1 wird eine elastomere Siliconzusammensetzung hergestellt und unter Zusatz von 0,57 g feingemahlenem Wolfram(IV)sulfid homogen vermischt. Die so hergesetllte Mischung wird, wie in Beispiel 1 beschrieben, gehärtet und die Proben in entsprechender Weise vorbereitet.

Tabelle 1

| A-Stufe 10°/175°C | Beispiel 1 | Beispiel 2 (FeS) 1,07 % | Beispiel 3 ($WS_2$) 1,07 % | Beispiel 4 (CdS) 1,07 % | Beispiel 5 (CdSe) 1,07 % | Beispiel 6 (FeSe) 0,02 % | Beispiel 7 ($WS_2$) 0,54 % |
|---|---|---|---|---|---|---|---|
| Härte (Shore A) (DIN 53 505) | 47 | 47 | 45 | 47 | 48 | 41 | 47 |
| Bruchdehnung (%) (DIN 53 504) | 800 | 760 | 800 | 780 | 760 | 750 | 760 |
| Zugfestigkeit (MPa) (DIN53 504) | 8,3 | 8,1 | 8,2 | 8,2 | 8,3 | 5,5 | 8,2 |
| Compression set (%) (DIN 53 517, 22 h/175°C) | 52 | 47 | 12 | 25 | 11 | 29 | 15 |
| B-Stufe 10'/175°C + 4 h/200°C HL | | | | | | | |
| Härte (Shore A) (DIN 53 505) | 51 | 50 | 49 | 50 | 50 | 43 | 50 |
| Bruchdehnung (%) (DIN53 504) | 625 | 600 | 720 | 620 | 610 | 660 | 660 |
| Zugfestigkeit (MPa) (DIN53 504) | 8,9 | 8,1 | 9,4 | 8,6 | 8,5 | 7,4 | 8,5 |
| Compression set (%) (DIN 53 517, 22 h/175°C) | 12 | 7 | 8 | 20 | 6 | 24 | 9 |

## Patentansprüche

1. Zu Elastomeren härtbare Massen auf Grundlage von Organopolysiloxanen mit vermindertem Druckverformungsrest, dadurch gekennzeichnet, daß sie im wesentlichen die folgenden Bestandteile enthalten:
a) 100 Gewichtsteile eines vinylhaltigen Grundpolymers der Formel

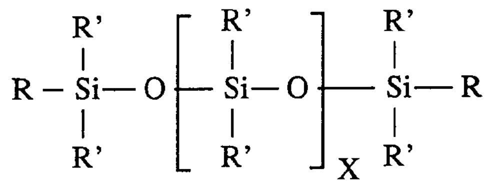

worin R und R′ Alkylreste mit 1 bis 8 Kohlenstoffatomen, Acrylreste, Vinylreste und Fluoralkylreste mit 3 bis 8 Kohlenstoffatomen sind, so daß das Polymer 0,0002 bis 3 Gew.-% Vinylgruppen enthält, und X so variiert wird, daß die Viskosität des Polymeren von 0,1 bis 1.000 Pa.s (von 100 bis 1.000.000 cp) bei 25°C reicht,
b) 0 bis 10 Gewichtsteile silanolhaltiger Siliconverbindungen mit einer Viskosität im Bereich von 0,010 bis 1 Pa.s (10 bis 1.000 cp) bei 25°C, wobei die organische Gruppe unter Alkylresten mit 1 bis 8 Kohlenstoffatomen, Vinylresten, Arylresten und Fluoralkylresten mit 3 bis 8 Kohlenstoffatömen so ausgewählt ist, daß das Polymer einen Silanolgehalt von 2 bis 10 % aufweist.
c) 0 bis 200 Gewichtsteile eines Füllstoffs,
d) 1 bis 50 Gewichtsteile eines Polysiloxanes der Formel

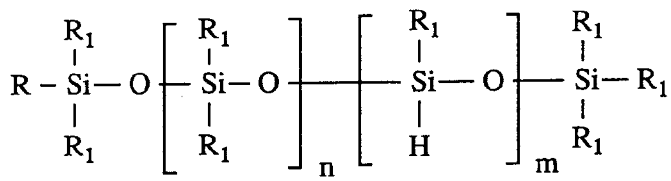

wobei
$R_1$ ein Alkyfrest mit 1 bis 8 Kohlenstoffatomen oder Aryl- und Fluoralkylreste mit 3 bis 8 C-Atomen ist,
$m > 3$ und
$n + m$ wird so variiert, daß das Polymer eine Viskosität im Bereich 0,005 bis 0,1 Pa.s bei 25°C hat und
e) 1 bis 250 ppm eines Platinkatalysators sowie gegebenenfalls Inhibitoren oder weiterer Hilfsmittel, sowie
f) 0,01 bis 8 Gew.-Teile eines Übergangsmetallsulfids und/oder -selenids oder einer Mischung mehrerer Übergangsmetällsulfide und/oder Selenide.

2. Massen gemäß Anspruch 1, dadurch gekennzeichnet, daß sie ein Übergangsmetallsulfid und/oder -selenid oder eine Mischung mehrerer Übergangsmetallsulfide und/oder -selenide der Elemente Eisen, Kobalt, Nickel, Cadmium, Zink, Molybdän und/oder Wolfram enthalten.

3. Massen gemäß einem der Ansprüche 1 oder 2, dadurch gekennzeichnet, daß die Übergangsmetallsulfide und/oder -selenide eine mittlere Teilchengröße von 10 bis 25 Mikrometer aufweisen.

4. Verfahren zur Herstellung von Massen mit vermindertem Druckverformungsrest gemäß einem der Ansprüche 1 bis 3, dadurch gekennzeichnet, daß man die Bestandteile a) - e) umsetzt.

## Claims

1. Organopolysiloxane-based compounds which have a reduced compression set and can be cured to elastomers, characterized in that they essentially contain the following constituents:
a) 100 parts by weight of a vinyl-containing basic polymer corresponding to the following formula:

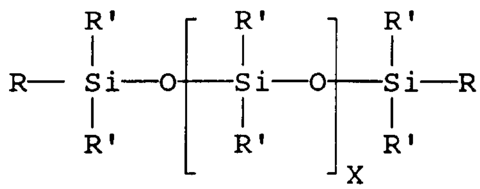

in which R and R′ are alkyl groups containing 1 to 8 carbon atoms, aryl groups, vinyl groups and fluoroalkyl groups containing 3 to 8 carbon atoms, so that the polymer contains 0.0002 to 3% by weight vinyl groups, and X is varied so the viscosity of the polymer extends from 0.1 to 1,000 Pa.s (from 100 to 1,000,000 cp) at 25°C,

b) 0 to 10 parts by weight of silanol-containing silicone compounds having a viscosity in the range from 0.010 to 1 Pa.s (10 to 1,000 cp) at 25°C, the organic group being selected from alkyl groups containing 1 to 8 carbon atoms, vinyl groups, aryl groups, fluoroalkyl groups containing 3 to 8 carbon atoms so that the polymer has a silanol content of 2 to 10%,

c) 0 to 200 parts by weight of a filler,

d) 1 to 50 parts by weight of a polysiloxane corresponding to the following formula:

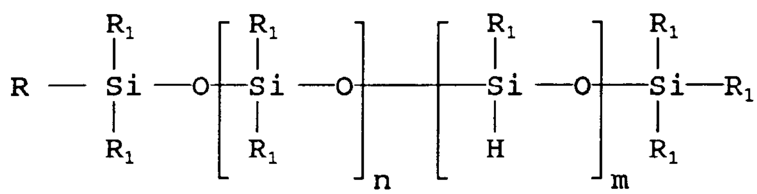

in which

$R_1$ is an alkyl group containing 1 to 8 carbon atoms or aryl and fluoroalkyl groups containing 3 to 8 carbon atoms,

m > 3 and

n + m is varied so that the polymer has a viscosity in the range from 0.005 to 0.1 Pa.s at 25°C and

e) 1 to 250 ppm of a platinum catalyst and, optionally, inhibitors or other auxiliaries and

f) 0.01 to 8 parts by weight of a transition metal sulfide and/or selenide or a mixture of several transition metal sulfides and/or selenides. chalcogenide in finely divided form, preferably sulfides and/or selenides of the elements iron, cobalt, nickel, cadmium, zinc, molybdenum and tungsten, a quantity of 0.05 to 4 parts by weight being preferred.

**2.** Compounds as claimed in claim 1, characterized in that they contain a transition metal sulfide and/or selenide or a mixture of several transition metal sulfides and/or selenides of the elements iron, cobalt, nickel, cadmium, zinc, molybdenum and/or tungsten.

**3.** A process as claimed in claim 1 or 2, characterized in that the transition metal sulfides and/or selenides have an average particle size of 10 to 25 micrometers.

**4.** A process for the production of the compounds having a reduced compression set claimed in any of claims 1 to 3, characterized in that components a) to e) are reacted.

## Revendications

**1.** Compositions à base d'organopolysiloxanes, durcissables en donnant des élastomères présentant une valeur réduite de la déformation permanente après compression, compositions caractérisées en ce qu'elles contiennent essentiellement les constituants suivants :

a) 100 parties en poids d'un polymère de base, contenant des groupes vinyles, de formule :

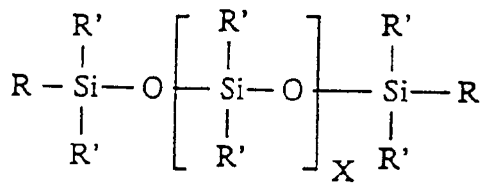

dans laquelle
R et R′ représentent des restes alkyles ayant 1 à 8 atomes de carbone, des restes acrylyles, des restes vinyles et des restes fluoro-alkyles comportant 3 à 8 atomes de carbone, de sorte que le polymère contient 0,0002 à 3 % en poids de groupes vinyles, et X peut varier de manière que la viscosité du polymère vale de 0,1 à 1 000 Pa.s (de 100 à 1 000 000 cP) à 25°C ;
b) 0 à 10 parties en poids de composés siliconiques contenant des groupes silanols et ayant une viscosité de 0,010 à 1 Pa.s (10 à 1 000 cP) à 25°C, les groupes organiques étant choisis parmi des restes alkyles ayant 1 à 8 atomes de carbone, des restes vinyles, des restes aryles et des restes fluoro-alkyles ayant 3 à 8 atomes de carbone, de manière que le polymère présente une teneur en silanol de 2 à 10 %;
c) 0 à 200 parties en poids d'une charge ;
d) 1 à 50 parties en poids d'un polysiloxane de formule :

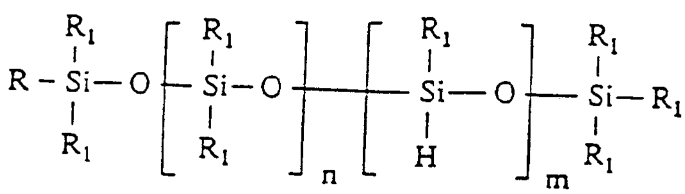

dans laquelle
$R_1$ représente un reste alkyle ayant 1 à 8 atomes de carbone ou des restes aryles ou fluoro-alkyles ayant 3 à 8 atomes de carbone ;
m est supérieur à 3 ; et
la somme (n + m) peut varier de manière que le polymère présente une viscosité de l'ordre de 0,005 à 0,1 Pa.s à 25°C ; et
(e) 1 à 250 ppm d'un catalyseur au platine ainsi que des inhibiteurs ou d'autres adjuvants, et également
(f) 0,01 à 8 parties en poids d'un sulfure et/ou séléniure de métal de transition, ou un mélange de plusieurs sulfures et/ou séléniures de métaux de transition.

**2.** Compositions selon la revendication 1, caractérisées en ce qu'elles contiennent un sulfure et/ou séléniure de métal de transition ou un mélange de plusieurs sulfures et/ou séléniures de métaux de transition constitués par les éléments fer, cobalt, nickel, cadmium, zinc, molybdène et/ou tungstène.

**3.** Compositions selon l'une des revendications 1 ou 2, caractérisées en ce que les sulfures et/ou séléniures de métaux de transition présentent une grosseur particulaire moyenne de 10 à 25 μm.

**4.** Procédé de préparation de compositions ayant une valeur réduite de la déformation permanente sous compression, selon l'une des revendications 1 à 3, procédé caractérisé en ce qu'on fait réagir les constituants (a)-(e).